# EUROPÄISCHE PATENTSCHRIFT

(11) **EP 1 548 334 B1**
(45) Veröffentlichungstag und Bekanntmachung des Hinweises auf die Patenterteilung: **07.03.2007**
(21) Anmeldenummer: 04027031.6
(22) Anmeldetag: 13.11.2004
(51) Int. Cl.: F16H 63/32

(54) **Schaltgabel**
Shift fork
Fourchette de boîte de vitesses

(30) Priorität: 24.12.2003 DE 10360719
(43) Veröffentlichungstag der Anmeldung: 29.06.2005
(73) Patentinhaber: Schaeffler KG, 91074 Herzogenaurach (DE)
(72) Erfinder: Grieshammer, Andreas, 90429 Nürnberg (DE); Pogrebnyak, Dmytro, 90409 Nürnberg (DE)

(56) Entgegenhaltungen:
- DE-A- 10 018 850
- DE-A- 10 045 506
- DE-A- 10 125 098
- DE-B1- 2 547 476

## Beschreibung

Die Erfindung betrifft eine Schaltgabel für ein Wechselgetriebe, mit einem Grundkörper, der im Wesentlichen gabelförmig ausgeführt ist, und der eine Schiebemuffe in deren Umfangsrichtung zumindest teilweise umgreift, und mit einem am Grundkörper befestigten Führungsteil, entsprechend dem Oberbegriff des Anspruchs 1.

In manuellen oder automatisierten Getrieben ist zwischen zwei Gangrädern, die drehbar auf einer Getriebewelle gelagert sind, ein Synchronkörper und eine Schiebemuffe angeordnet. Die Schiebemuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Ganges wird die Schiebemuffe in axialer Richtung auf eines der Gangräder zu verschoben, bis ihre Innenverzahnung in eine am Gangrad angebrachte Kupplungsverzahnung eingreift. Die Innenverzahnung der Schiebemuffe steht dann sowohl mit der Kupplungsverzahnung als auch mit der Außenverzahnung des Synchronkörpers in Eingriff. Die Schaltgabel hat die Aufgabe die axiale Bewegung von einem Schaltgestänge auf die Schiebemuffe zu übertragen. Dabei ist die Schaltgabel axial verschiebbar auf einer Schaltwelle bzw. Schaltstange gelagert und greift mit Mitnehmern in eine Führungsnut der Schiebemuffe ein.

Eine derartige Schaltgabel ist aus der DE 101 25 098 bekannt. Diese Schaltgabel besteht aus einem durch ein Umformverfahren aus Stahlblech hergestellten gabelförmigen Grundkörper. Der Grundkörper ist bogenförmig ausgebildet und läuft in zwei Mitnehmern aus. Die Mitnehmer schließen ein Schaltmaul der Schaltgabel zwischen sich ein. Der Grundkörper ist als ein im Längsschnitt U-förmigen Profilkörper ausgebildet. An der Schaltgabel ist zur Versteifung der räumlichen Struktur ein separat gefertigtes Formteil aus Blech angebracht, wobei die Verbindung durch Schweißen hergestellt wird. An das Formteil schließt sich ein Führungsauge an, mit welchem die Schaltgabel auf einer Schaltwelle axial verschiebbar gelagert ist. Weiterhin ist am Formteil bzw. an dem Führungsauge ein Schaltarm durch eine Schweißverbindung angebracht. Diese Ausführungsform stellt eine gewichtsoptimierte und kostengünstig zu fertigende Schaltgabel dar. Negativ wirkt sich in dieser Ausführungsform die kostenaufwändige Befestigung der einzelnen Komponenten mittels Schweißverbindungen aus. Ein weiterer Nachteil liegt darin, dass nur miteinander verschweißbare Materialien verwendet werden können. Zusätzlich besteht durch den Wärmeeintrag während des Schweißvorgangs die Gefahr, dass Eigenspannungen entstehen, die zu einer Verformung der Komponenten führen.

Das gattungsgemäße Dokument DE 100 18 850 A1 offenbart eine Schaltgabel, die zwei zu einer Einheit zusammengefügte Halbschalen umfasst. Zur Versteifung der Schaltgabel ist jede Halbschale mit einem Kragen versehen, der bis auf die gabelförmige Afnahme die Schaltgabel außenseitig umschließt. Kragen und Grundkörper der Schaltgabel sind einteilig ausgebildet und weisen die gleiche Blechstärke auf. Die Halbschalen werden vor einer Montage mit dem Führungsrohr oder der Schaltstange unlösbar miteinander verbunden.

### Zusammenfassung der Erfindung

Der Erfindung liegt daher die Aufgabe zugrunde diese geschilderten Nachteile zu vermeiden und somit eine kostengünstig zu produzierende, maßhaltige Schaltgabel in Leichtbauweise zu schaffen, deren einzelne Komponenten leicht und kostengünstig montierbar sind. Weiterhin soll die Werkstoffwahl der Komponenten sich nicht auf verschweißbare Materialien beschränken.

Erfindungsgemäß wird diese Aufgabe dadurch gelöst, dass das Führungsteil mit dem Grundkörper durch wenigstens eine Nietverbindung verbunden ist.

Der Einsatz von Nietverbindungen anstatt der im Stand der Technik üblichen kostenintensiven Schweißverbindungen löst das Problem des hohen Wärmeeintrags während des Schweißvorgangs. Wärmebedingte Eigenspannungen und Verformungen der Bauteile können dadurch vermieden werden, wodurch maßhaltige Schaltgabeln ohne teure Nachbearbeitungsschritte realisiert werden können. Ein weiterer Vorteil entsteht dadurch, dass bei der Werkstoffauswahl nicht mehr auf die Verschweißbarkeit der Komponenten Rücksicht genommen werden muß.

In einer vorteilhaften Weiterbildung der Erfindung ist wenigstens ein Nietzapfen der Nietverbindung einteilig mit dem Grundkörper ausgeführt.
Weiterhin ist vorgesehen, dass der Grundkörper mit dem wenigstens einen Nietzapfen ein einteiliges, spanlos umgeformtes Blechteil ist.

Die Ausführung des Grundkörpers als spanlos umgeformtes Blechteil, vornehmlich ein Stahlblechteil, stellt eine in der Serien- und Massenproduktion kostengünstige Herstellungsmethode dar. Während des Formgebungsprozesses können verschiedenste steifigkeitserhöhende Elemente, beispielsweise Profilkörper, ausgeformt werden, wodurch Dünnblechteile eingesetzt werden können. Neben einem Gewichtsvorteil sind auch die in der Herstellung anzuwendenden Kräfte geringer, was zu geringeren Taktzeiten und damit zu niedrigeren Produktionskosten führt. Spanende Nachbearbeitungsschritte, wie bei Guß- oder Sinterteilen nötig, entfallen hier.

Der Grundkörper ist mit einteilig mit diesem ausgeführten Nietzapfen versehen. Die Nietzapfen können während des spanlosen Herstellungsprozesses des Grundkörpers an diesem ausgeformt werden. Weiterhin ist vorgesehen, dass das über die Nietverbindung am Grundkörper befestigte Führungsteil mit zu den Nietzapfen korrespondierenden Öffnungen ausgeführt ist, die ebenfalls während des spanlosen Formgebungsprozesses des Führungsteils an diesem ausgeformt werden können. Während der Montage des Führungsteils an dem Grundkörper werden die Nietzapfen in die korrespondierenden Öffnungen eingeführt und die Nietverbindung hergestellt. Dabei sind verschiedene Arten von Nietverbindungen denkbar. Beispielsweise Nietverbindungen, die das Führungsteil hintergreifen oder in den Öffnungen befestigt sind. Neben dem Vorteil des kostengünstigen spanlosen Formgebungsprozesses des Grundkörpers inklusive der Nietzapfen und des Formteils mit den Öffnungen sind in dieser Ausführungsform während der Montage keine komplizierten Positioniermaßnahmen, wie beispielsweise bei der Herstellung der Schweißverbindung nötig. Die relativen Positionen sind durch die Nietzapfen und die Öffnungen vorgegeben und werden durch einfaches Ineinanderstecken erreicht und bis zum Herstellen der Nietverbindung gehalten.

In einer erfindungsgemäßen Ausführungsform ist das Führungsteil als Schaltschiene ausgebildet.
Die am Grundkörper angebrachten Nietzapfen greifen durch an der Schaltschiene ausgebildete Öffnungen. Anschließend wird die Nietverbindung hergestellt. Dadurch entsteht eine feste Verbindung zwischen diesen Bauteilen und Verschiebungen der Schaltschiene werden direkt auf die Schaltgabel übertragen. Die Schaltschiene kann ebenfalls ein in einem spanlosen Umformprozeß hergestelltes Blechteil sind, wobei die Öffnungen während des Formgebungsprozesses in die Schaltschiene eingebracht werden können. Ebenfalls denkbar in diesem Zusammenhang sind Ausführungsformen, in denen die Nietzapfen einteilig mit der Schaltschiene ausgeführt und die zu den Nietzapfen korrespondierenden Öffnungen am Grundkörper ausgebildet sind.

In einer weiteren erfindungsgemäßen Ausführungsform umgreift das Führungsteil ein Führungsauge und geht davon ausgehend in mindestens einen Schenkel über, der am Grundkörper anliegt, wobei der Schenkel und der Grundkörper mittels wenigstens einer Nietverbindung verbunden sind. Vorteilhafterweise ist das Führungsteil ein einteiliges, spanlos umgeformtes Blechteil.

In das Führungsauge können Gleitlager, Linearwälzlager oder Radial-Linearwälzlager eingebracht werden. Über die Lager ist die Schaltgabel auf einer Schaltwelle oder einer Schaltstange axial verschiebbar gelagert, wodurch der Schaltkomfort erhöht und der Verschleiß der Bauteile gesenkt wird.

In einer weiteren vorteilhaften Ausführungsform besteht das Führungsteil aus einem Verbindungsteil und einem gebogenen Deckel mit zwei offenen Enden, wobei der Deckel an seinen offenen Enden am Verbindungsteil derart befestigt ist, dass ein Führungsauge durch die Baueinheit von Deckel und Verbindungsteil umgriffen wird und das Verbindungsteil an zumindest einem Bereich des Grundkörpers anliegt, und dort mit dem Grundkörper mittels der Nietverbindung verbunden ist.
Vorteilhafterweise ist vorgesehen das Verbindungsteil mit dem gebogenen Deckel mittels wenigstens einer Nietverbindung zu verbinden, wobei der Deckel und das Verbindungsteil je ein spanlos umgeformtes Blechteil ist.
Weiterhin ist der wenigstens eine Nietzapfen der Nietverbindung einteilig mit dem Deckel ausgeführt und das Verbindungsteil mit wenigstens einer zu dem wenigstens einen Nietzapfen korrespondierenden Öffnungen versehen, in die der wenigstens eine Nietzapfen zumindest eingeführt und unlösbar verformt ist.

Am Grundkörper ist ein in einem spanlosen Formgebungsprozeß hergestelltes Verbindungsteil mittels einer Nietverbindung befestigt. Dabei ist die Nietverbindung an zwei gegenüberliegenden Enden des Verbindungsteils realisiert, die am Grundkörper anliegen. Die in das Verbindungsteil eingebrachten zu den am Grundkörper angebrachten Nietzapfen korrespondierenden Öffnungen können während des spanlosen Formgebungsprozesses ausgebildet werden. Der mittlere Abschnitt des Verbindungsteils erstreckt sich vom Grundkörper weg. An diesem mittleren Abschnitt ist ein erster teilzylindrischer Abschnitt ausgebildet. An den Rändern des ersten teilzylindrischen Abschnitts ist ein ebenfalls teilzylindrisch ausgeführter, in einem spanlosen Formgebungsprozeß hergestellter Deckel derart angebracht, dass eine nahezu zylindrische Führungshülse gebildet wird, in die ein Lager, beispielsweise ein Gleit-, Linearwälz- oder Radial-Linearwälzlager eingebracht werden kann. Die Verbindung zwischen Deckel und Verbindungsteil ist als Nietverbindungen ausgeführt. Dabei ist vorgesehen, dass an den Rändern des Deckels, die nach der Montage am Verbindungsteil anliegen, auf das Verbindungsteil zu weisende Nietzapfen angebracht sind, die während des spanlosen Formgebungsprozesses des Deckels einteilig mit diesem ausgeführt werden. Die dazu korrespondierenden Öffnungen im Verbindungsteil sind ebenfalls während dessen spanlosen Formgebungsprozesses an diesem ausgebildet.
Durch die Verwendung eines Verbindungsteils, welches zumindest teilweise am Grundkörper der Schaltgabel anliegt, kann die Steifigkeit der Schaltgabel weiter erhöht werden.

In einer weiteren Ausgestaltung der Erfindung ist der wenigstens eine Nietzapfen der wenigstens einen Nietverbindung einteilig mit dem Führungsteil ausgeführt.
Zudem ist vorgesehen, dass das Führungsteil und der Grundkörper je ein spanlos geformtes Blechteil ist, und das Führungsteil als ein gebogener Deckel mit zwei offenen Enden ausgeführt ist, wobei an den offenen Enden wenigstens ein Nietzapfen der Nietverbindung ausgeformt ist.
Vorteilhafterweise liegen die offenen Enden des Führungsteils am Grundkörper derart an, dass das Führungsteil und der Grundkörper als Baueinheit ein Führungsauge umgreifen.

In dieser Ausführungsform besteht die Schaltgabel nur aus zwei Komponente, wodurch sich der Montagaufwand verringert. Am Grundkörper ist eine teilzylindrische Aufnahme ausgeformt, an deren Begrenzungen ein ebenfalls teilzylindrischer Deckel angebracht ist. Dadurch wird eine nahezu zylindrische Führungshülse gebildet, in die, wie oben beschrieben, eine Lageranordnung zur Lagerung der Schaltgabel auf einer Schaltwelle oder Schaltstange eingebracht werden kann. Die Verbindung erfolgt analog der weiter oben beschriebenen mit einem Verbindungsteil versehenen Ausführungsform über Nietverbindungen. Die Nietzapfen bzw. die dazu korrespondierenden Öffnungen sind einteilig an den jeweiligen Komponenten während ihres spanlosen Formgebungsprozesses ausgebildet.

In einer Weiterbildung der Erfindung wird eine Schaltgabel für ein Wechselgetriebe vorgeschlagen, an der ein Schaltarm angebracht ist, wobei der Schaltarm mit der Schaltgabel durch wenigstens eine Nietverbindung verbunden ist.
Alternativ kann die Schaltgabel für ein Wechselgetriebe, mit einem Grundkörper, einem Verbindungsteil und einem Schaltarm ausgeführt sein, wobei der Schaltarm am Verbindungsteil und das Verbindungsteil am Grundkörper angebracht ist und wobei der Schaltarm mit dem Verbindungsteil durch wenigstens eine Nietverbindung verbunden ist.

In einer vorteilhaften Weiterbildung der Erfindung ist wenigstens ein Nietzapfen der wenigstens einen Nietverbindung einteilig mit dem Schaltarm ausgeführt.
Weiterhin ist der Schaltarm als ein spanlos umgeformtes Blechteil ausgeführt.
Durch die Anwendung der oben für den Grundkörper und das Führungsteil beschriebenen Verbindungsart auf den Schaltarm mit der Schaltgabel oder dem Verbindungsteil werden natürlich auch alle daraus resultierenden Vorteile für diese Verbindung erreicht.

Vorteilhafterweise ist der Grundkörper ein Profilkörper, wobei der Profilkörper im Schnitt, senkrecht zur Fläche, die durch den gabelförmigen Grundkörper definiert ist, ein im Wesentlichen U-förmiges Profil aufweist.
Durch die Ausführung des Grundkörpers als Profilkörper, speziell als U-förmig ausgebildeter Profilkörper, kann die Steifigkeit der Schaltgabel signifikant erhöht werden.

### Kurze Beschreibung der Zeichnungen

Weitere Merkmale der Erfindung ergeben sich aus der nachfolgenden Beschreibung und aus den Zeichnungen, in der zwei Ausführungsbeispiele der Erfindung vereinfacht dargestellt sind. Es zeigen:
- Figur 1: einen Längsschnitt durch eine Schiebemuffe mit Führungsnut, in die eine Schaltgabel eingreift,
- Figur 2: eine perspektivische Ansicht einer ersten erfindungsgemä-ßen Schaltgabel,
- Figur 3 bis 5: eine perspektivische Ansicht einer zweiteiligen Führungshülse nach Figur 1, die die Herstellung der Nietverbindung verdeutlicht,
- Figur 6: eine perspektivische Ansicht einer zweiten Ausführungsform einer erfindungsgemäßen Schaltgabel.

### Ausführliche Beschreibung der Zeichnungen

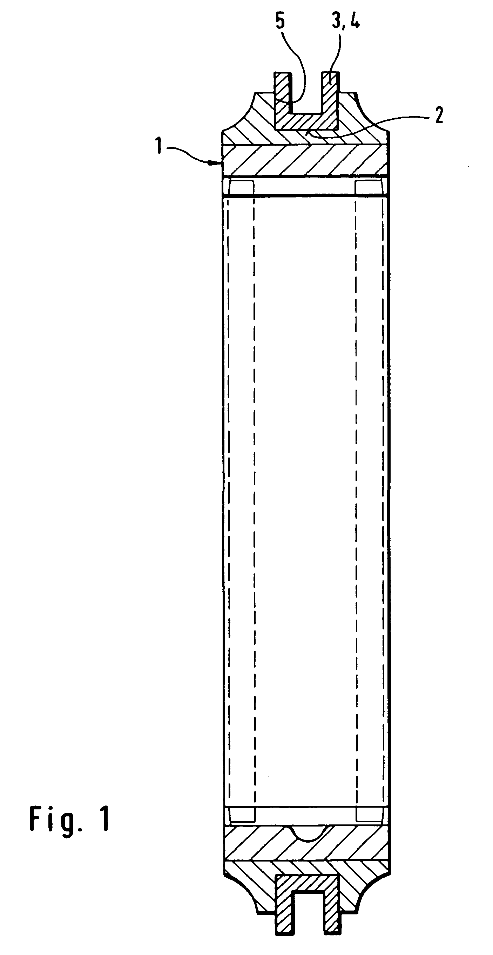

Figur 1 zeigt einen Längsschnitt durch eine Schiebemuffe 1. Die Schiebemuffe 1 ist mit einer Führungsnut 2 versehen, in die Mitnehmer 3 einer Schaltgabel 4 eingreifen. Die Mitnehmer 3 stehen in ständigem Reibkontakt mit der Wandung 5 der Führungsnut 2.

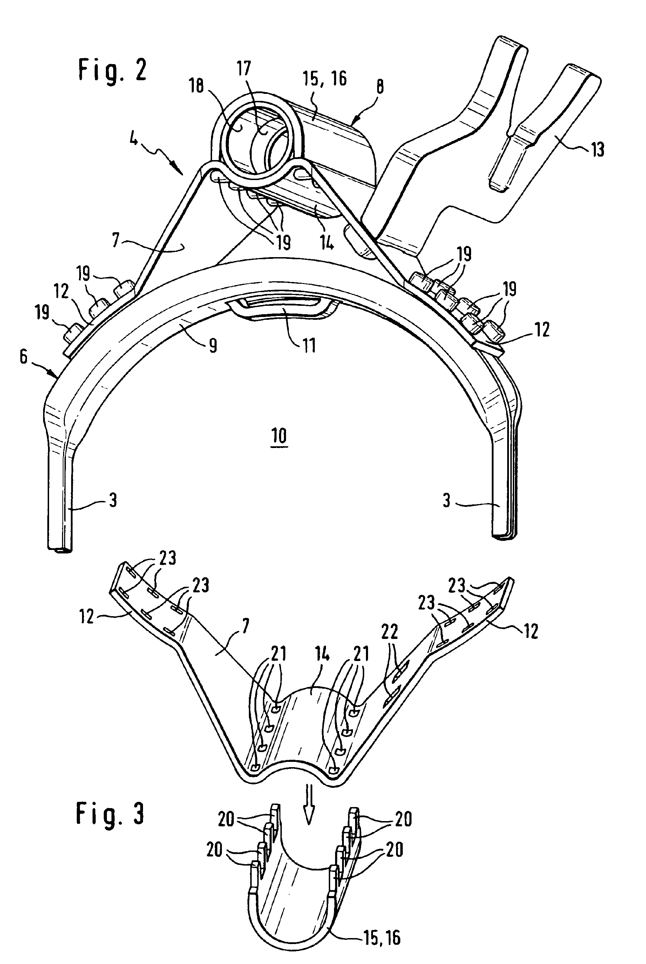

In Figur 2 ist eine erfindungsgemäße Schaltgabel 4 in einer perspektivischen Ansicht dargestellt. Diese besteht aus einem Grundkörper 6, einem Verbindungsteil 7 und einem als Führungshülse ausgeführten Führungsteil 8. Ebenfalls denkbar wäre den Grundkörper 6 mit einem als Schaltschiene ausgeführtes Führungsteil 8 fest zu verbinden. Der Grundkörper 6 ist einteilig aus einem Mittelabschnitt 9 und zwei Mitnehmern 3 ausgeführt. Dessen Mittelabschnitt 9 besteht aus einem gebogenen Profilkörper, der auf jeder Seite in je einen Mitnehmer 3 ausläuft. Die Profile des Mittelabschnittes 9 und der Mitnehmer 3 sind im Wesentlichen U-förmig ausgebildet, wobei die Profile der Mitnehmer 3 einer Führungsnut 2 einer Schiebemuffe 1 angepasst sind, in die diese eingreifen. Die Abmessungen des Profils des Mittelabschnittes 9 sind, im Vergleich zum Profil der Mitnehmer 3, größer ausgeführt, wodurch die Steifigkeit der Schaltgabel 4 erhöht wird. Das Profil des Mittelabschnittes 9 geht kontinuierlich in das der Mitnehmer 3 über. Der Grundkörper 6 schließt ein Schaltmaul 10 zwischen den zwei Mitnehmern 3 ein.

In der dargestellten Ausführungsform ist die Schaltgabel 4 am Grundkörper 6 mit einer Stützlasche 11 versehen, die in das Schaltmaul 10 hineinragt. Die Stützlasche 11 kann einteilig mit dem Grundkörper 6 oder als separates Teil ausgeführt sein, welches nachträglich am Grundkörper 6 angebracht wird. Die Stützlasche 11 greift ebenfalls in die Führungsnut 2 einer nicht dargestellten Schiebemuffe 1 ein, wodurch die Schiebemuffe 1 bei axialer Verschiebung der Schaltgabel 4 nun an drei Stellen mit einer Kraft beaufschlagt wird, was sich positiv auf die auf die Schaltgabel 4 wirkenden Torsions- und Widerstandsmomente auswirkt. Sowohl die Stützlasche 11 als auch die Mitnehmer 3 sind in den Bereichen, in denen sie in die Führungsnut 2 der Schiebemuffe 1 eingreifen, mit einer Gleitschicht versehen. Denkbar sind Metall- bzw. Metallegierungsschichten, beispielsweise Molybdän-, CoMoSi-, Nickel-Graphit-, Bronze- oder Messingschichten, die mittels eines Spritzverfahrens, vorzugsweise mittels eines Flamm-, Lichtbogen- oder Plasmaspritzverfahrens, aufgebracht sind. Ebenso denkbar ist der Einsatz von Plattierverfahren, wie Schweiß- oder Walzplattieren, um die Gleitschichten aufzubringen. Weiterhin kann die Gleitbeschichtung als Kunststoffschicht ausgeführt sein, wobei der Kunststoff beispielsweise eine Polyamidverbindung ist und mittels eines Spritzgussverfahrens aufgebracht ist.

An der vom Schaltmaul 10 abgewandten Seite des Mittelabschnitts 9 des Grundkörpers 6 ist ein Verbindungsteil 7 angebracht. Dabei handelt es sich um ein längliches, gebogenes Blechteil, das mit seinen zwei gegenüberliegenden, weiter voneinander entfernten Enden 12 am Grundkörper 6 anliegt und daran befestigt ist. Der mittlere Teil des Verbindungsteils 7 steht vom Grundkörper 6, in Richtung vom Schaltmaul 10 weg, ab. Dort ist ein Schaltarm 13 angebracht, in den im Betrieb ein nicht dargestellter Schaltfinger eingreift, der die axialen Schaltbewegungen eines Schaltgestänges auf die Schaltgabel 4 überträgt. Weiterhin ist an dem Verbindungsteil 7 ein erster Abschnitt 14 des Führungsteils 8 ausgeformt. Der zweite Abschnitt 15 des Führungsteils 8 wird durch einen Deckel 16 gebildet der an dem ersten Abschnitt 14 befestigt ist. Der erste und der zweite Abschnitt 14, 15 bilden eine nahezu zylinderförmige Aufnahme 17 mit geschlossener Mantelfläche, in die ein Gleitlager 18 eingebracht ist. Über das Gleitlager 18 ist die Schaltgabel 4 axial verschiebbar auf einer nicht dargestellten Schaltstange oder Schaltwelle gelagert. Alternativ zum Einsatz des Gleitlagers 18 sind auch Linear- oder Radial-Linearwälzlager einsetzbar.

Der Grundkörper 6, das Verbindungsteil 7, der Deckel 16 und der Schaltarm 13 sind in einem spanlosen Umformprozess aus je einem Stahlblech gefertigt.

Die Verbindungen zwischen dem Grundkörper 6 und dem Verbindungsteil 7, zwischen dem Schaltarm 13 und dem Verbindungsteil 7 und zwischen dem Deckel 16 und dem Verbindungsteil 7 sind in Form von Nietverbindungen 19 ausgebildet. Zu diesem Zweck sind an dem Grundkörper 6, dem Schaltarm 13 und dem Deckel 16 Nietzapfen 20 an- und in das Verbindungsteil 7 Öffnungen 21, 22, 23 eingebracht. Dies und das Herstellen der Nietverbindungen 19 ist exemplarisch am Beispiel des als Führungshülse ausgebildeten Führungsteils 8 in den Figuren 3 bis 5 dargestellt.

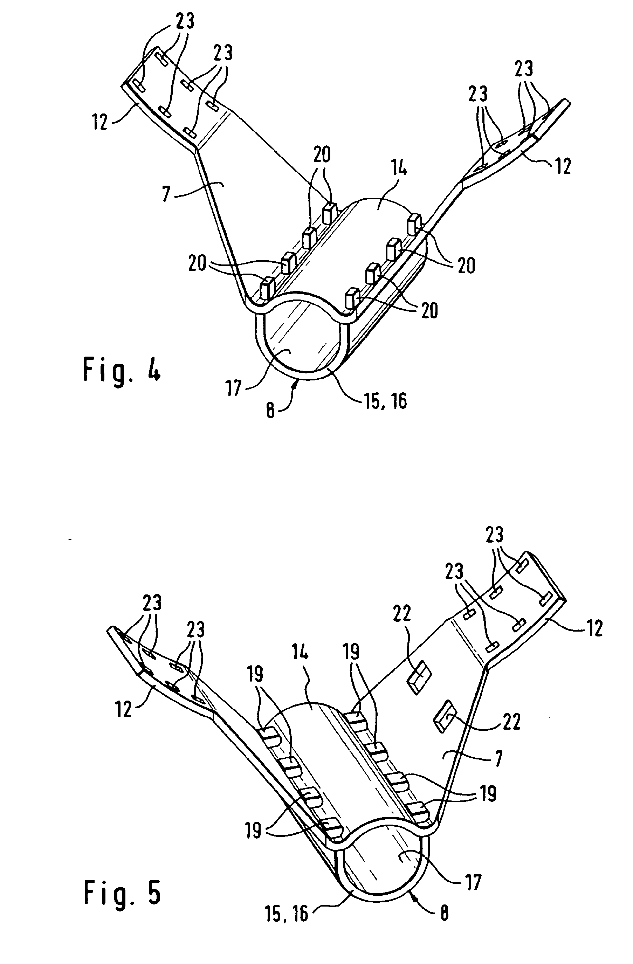

Figur 3 zeigt das Verbindungsteil 7 und den Deckel 16. Der Deckel 16 ist mit Nietzapfen 20 versehen, die einteilig mit ihm ausgeführt sind. Die Nietzapfen 20 sind an den offenen Enden des Deckels 16, die an dem Verbindungsteil 7 befestigt werden, auf das Verbindungsteil 7 zu gerichtet, angebracht. Das Verbindungsteil 7 ist mit korrespondierenden Öffnungen 21 versehen. Die Einzelteile werden positioniert und gefügt, wobei die Nietzapfen 20 durch die Öffnungen 21 hindurchgreifen und aus diesen, auf der dem Deckel 16 abgewandten Seite des Verbindungsteils 7, herausragen (Figur 4). Im letzten Schritt werden die Nietzapfen 20 vernietet und damit die Verbindung zwischen Verbindungsteil 7 und Deckel 16 hergestellt (Figur 5). Neben der dargestellten Ausführung der Nietverbindung 19, in der die Nietzapfen 20 durch die Öffnung 21 hindurchgreifen und durch axiales Stauchen des gesamten Nietzapfens 20 das Verbindungsteil 7 hintergreifen sind noch weitere Arten von Nietverbindungen 19 vorstellbar. Exemplarisch sollen hier noch Nietverbindungen 19 genannt werden, bei denen die Nietzapfen 20 in der Öffnung 21, 22, 23 befestigt werden. Dazu verjüngt sich die Öffnung 21, 22, 23 in Richtung des Deckels 16. Die Nietzapfen 20 werden in die Öffnung 21, 22, 23 eingeführt, wobei der Deckel 16 an der Seite des Verbindungsteils 7 anliegt, an der die Öffnungen 21, 22, 23 am kleinsten sind. Das Material der Nietzapfen 20 wird durch axiales oder radiales Verdrängen in den freien Raum der Öffnungen 21, 22, 23 gepresst.

Analog lassen sich auch die Nietverbindungen 19 zwischen Grundkörper 6, Verbindungsteil 7 und Schaltarm 13 herstellen. Zu diesem Zweck sind zusätzlich zu den Öffnungen 21 weitere Öffnungen 22, 23 in das Verbindungsteil 7 eingebracht, durch die einteilig mit dem Schaltarm 13 bzw. mit dem Grundkörper 6 ausgeführten Nietzapfen 20 geführt werden können. Sowohl die Nietzapfen 20, als auch die Öffnungen 21, 22, 23 können während der Herstellung der einzelnen Komponenten als Teil des spanlosen Umformungsprozesses ausgebildet werden. Dabei sind die Nietzapfen 20 am Mittelabschnitt 9 des Grundkörpers 6, an der dem Schaltmaul 10 abgewandten Seite, radial nach außen stehend, bzw. an dem offenen Ende des Schaltarms 13, das an dem Verbindungsteil 7 befestigt ist, auf das Verbindungsteil 7 zu gerichtet angebracht.

Aus dem Umstand, dass die im Stand der Technik üblichen Schweißverbindungen durch Nietverbindungen 19 ersetzt werden erwachsen eine Vielzahl von Vorteilen. Zum einen wird die Montage der Schaltgabel 4 erheblich vereinfacht. Durch die einteilige Ausführung der Nietzapfen 20 mit den Komponenten und das Vorformen der Öffnungen 21, 22, 23 durch die die Nietzapfen 20 hindurchgreifen wird eine exakte Positionierung der Einzelteile bei der Montage erreicht. Es müssen keine Maßnahmen getroffen werden um die Komponenten relativ zueinander auszurichten und diese Position zu halten, da sie ineinander eingesteckt werden. Weiterhin wird die Anzahl der Einzelteile nicht erhöht.
Das Ausformen der zur Nietverbindung 19 nötigen Mittel erfolgt während des spanlosen Formgebungsprozesses der einzelnen Komponenten. Dadurch ist sichergestellt, dass kaum zusätzliche Kosten entstehen.
Die Herstellung der Nietverbindung 19 ist kostengünstiger, als die Herstellung einer Schweißverbindung. Weiterhin sind Verformungen der einzelnen Komponenten durch Wärmeeintrag während des Schweißvorgangs ausgeschlossen und es können auch nicht miteinander verschweißbare Werkstoffe für die einzelnen Komponenten verwendet werden.

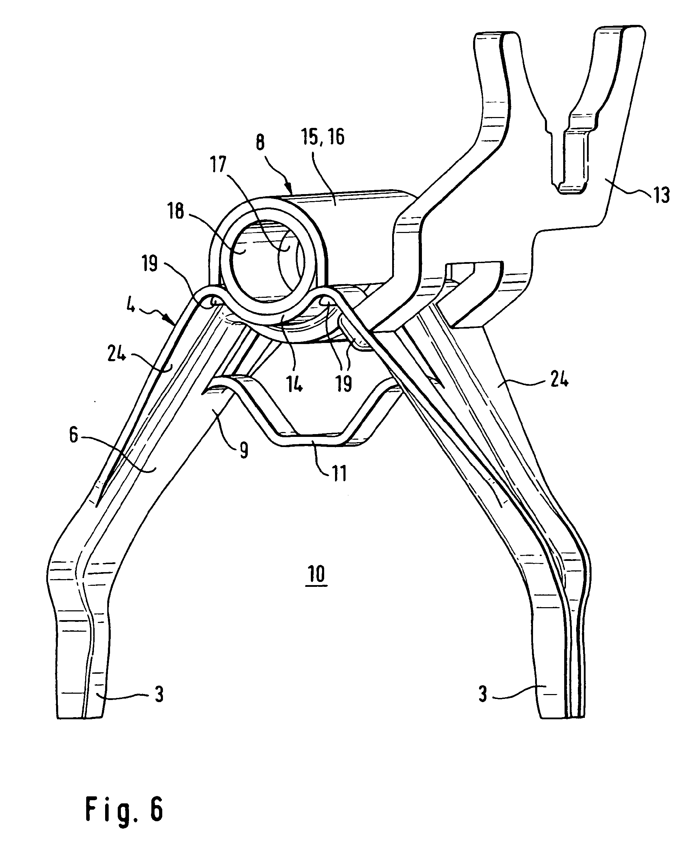

In Figur 6 ist eine zweite Ausführungsform einer erfindungsgemäßen Schaltgabel 4 dargestellt. Diese besteht aus einem Grundkörper 6 und einem als Führungshülse ausgeführten Führungsteil 8. Der Grundkörper 6 ist nahezu identisch, zu dem in Figur 2 dargestellten, ausgeführt, weswegen identische Teile mit gleichen Bezugszeichen versehen sind. Im Unterschied zur Ausführungsform aus Figur 2 ist der im Längsschnitt U-förmig ausgebildete Mittelabschnitt 9 des Grundkörpers 6 mit zwei Knotenblechen 24 versehen. Die Knotenbleche 24 schließen sich an die offenen Enden des U-förmigen Profils an und erstrecken sich in axialer Richtung von der Schaltgabel 4 weg. Die Knotenbleche 24 sind einteilig mit dem Grundkörper 6 ausgeführt und können im spanlosen Formgebungsprozess des Grundkörpers 6 ausgeformt werden.

Im Bereich der Knotenbleche 24 ist ein erster Abschnitt 14 des Führungsteils 8 ausgeformt. Der zweite Abschnitt 15 des Führungsteils 8 wird durch einen Deckel 16 gebildet, der im Bereich des ersten Abschnittes 14 am Grundkörper 6 befestigt ist. Der erste und der zweite Abschnitt 14, 15 bilden eine nahezu zylinderförmige Aufnahme 17 in die ein Gleitlager 18 eingebracht ist.

Wie in der ersten Ausführungsform ist die Verbindung der beiden Komponenten mittels einer Nietverbindung 19 hergestellt. Zu diesem Zweck sind an den am Grundkörper 6 zu befestigenden Seiten des Deckels 16 auf den Grundkörper 6 zu gerichtete Nietzapfen 20 angebracht und die Knotenbleche 24 sind mit Öffnungen 23 zur Aufnahme der Nietzapfen 20 versehen. Die Nietzapfen 20 sind einteilig mit dem Deckel 16 ausgeführt, und sowohl die Öffnungen 23 als auch die Nietzapfen 20 sind während des spanlosen Umformprozesses an den einzelnen Komponenten ausgebildet. Die Ausbildung der Nietverbindung 19 erfolgt analog des in den Figuren 3 bis 5 dargestellten Prozesses.

Neben den bereits bei der ersten Ausführungsform genannten Vorteilen erhält hier die Schaltgabel 4 durch die Einführung der Knotenbleche 24 zusätzliche Steifigkeit. Weiterhin ist die Anzahl der Einzelteile auf zwei reduziert, wodurch die Schaltgabel 4 noch kostengünstiger zu fertigen ist.

### Bezugszahlenliste

- 1: Schiebemuffe
- 2: Führungsnut
- 3: Mitnehmer
- 4: Schaltgabel
- 5: Wandung
- 6: Grundkörper
- 7: Verbindungsteil
- 8: Führungsteil
- 9: Mittelabschnitt
- 10: Schaltmaul
- 11: Stützlasche
- 12: Enden
- 13: Schaltarm
- 14: erster Abschnitt
- 15: zweiter Abschnitt
- 16: Deckel
- 17: Aufnahme
- 18: Gleitlager
- 19: Nietverbindung
- 20: Nietzapfen
- 21: Öffnungen
- 22: Öffnungen
- 23: Öffnungen
- 24: Knotenblech

## Patentansprüche

1. Schaltgabel (4) für ein Wechselgetriebe, mit
- einem Grundkörper (6), der im Wesentlichen gabelförmig ausgeführt ist, und
- der eine Schiebemuffe (1) in deren Umfangsrichtung zumindest teilweise umgreift, und
- mit einem am Grundkörper (6) befestigten Führungsteil (8),
- das Führungsteil (8) mit dem Grundkörper (6) durch wenigstens eine Nietverbindung (19) verbunden ist, **dadurch gekennzeichnet, dass**
- wenigstens ein Nietzapfen (20) der Nietverbindung (19) einteilig mit dem Grundkörper (6) ausgeführt ist und
- dass das Führungsteil (8) aus einem Verbindungsteil (7) und einem gebogenen Deckel (16) mit zwei offenen Enden besteht, wobei der Deckel (16) an seinen offenen Enden am Verbindungsteil (7) derart befestigt ist, dass ein Führungsauge durch die Baueinheit von Deckel (16) und Verbindungsteil (7) umgriffen wird und das Verbindungsteil (7) an zumindest einem Bereich des Grundkörpers (6) anliegt, und dort mit dem Grundkörper (6) mittels der Nietverbindung (19) verbunden ist.

2. Schaltgabel (4) nach Anspruch 1, **dadurch gekennzeichnet, dass** der Grundkörper (6) mit dem wenigstens einen Nietzapfen (20) ein einteiliges, spanlos umgeformtes Blechteil ist.

3. Schaltgabel (4) nach Anspruch 1, **dadurch gekennzeichnet, dass** das Führungsteil (8) als Schaltschiene ausgebildet ist.

4. Schaltgabel (4) nach Anspruch 1, **dadurch gekennzeichnet, dass** das Führungsteil (8) ein Führungsauge umgreift und davon ausgehend in mindestens einen Schenkel übergeht, der am Grundkörper (6) anliegt, wobei der Schenkel und der Grundkörper (6) mittels wenigstens einer Nietverbindung (19) verbunden sind.

5. Schaltgabel (4) nach Anspruch 4, **dadurch gekennzeichnet, dass** das Führungsteil (8) ein einteiliges, spanlos umgeformtes Blechteil ist.

6. Schaltgabel (4) nach Anspruch 1, **dadurch gekennzeichnet, dass** das Verbindungsteil (7) mit dem gebogenen Deckel (16) mittels wenigstens einer Nietverbindung (19) verbunden ist.

7. Schaltgabel (4) nach Anspruch 1, **dadurch gekennzeichnet, dass** der Deckel (16) ein spanlos umgeformtes Blechteil ist.

8. Schaltgabel (4) nach Anspruch 1, **dadurch gekennzeichnet, dass** das Verbindungsteil (7) ein spanlos umgeformtes Blechteil ist.

9. Schaltgabel (4) nach Anspruch 6, **dadurch gekennzeichnet, dass** der wenigstens eine Nietzapfen (20) der Nietverbindung (19) einteilig mit dem Deckel (16) ausgeführt ist.

10. Schaltgabel (4) nach Anspruch 6, **dadurch gekennzeichnet, dass** das Verbindungsteil (7) mit wenigstens einer zu dem wenigstens einen Nietzapfen (20) korrespondierenden Öffnungen (21) versehen ist, in die der wenigstens eine Nietzapfen (20) zumindest eingeführt und unlösbar verformt ist.

11. Schaltgabel (4) nach Anspruch 1, **dadurch gekennzeichnet, dass** der wenigstens eine Nietzapfen (20) der wenigstens einen Nietverbindung (19) einteilig mit dem Führungsteil (8) ausgeführt ist.

12. Schaltgabel (4) nach Anspruch 11, **dadurch gekennzeichnet, dass** das Führungsteil (8) ein spanlos geformtes Blechteil ist.

13. Schaltgabel (4) nach Anspruch 11, **dadurch gekennzeichnet, dass** der Grundkörper (6) ein spanlos geformtes Blechteil ist.

14. Schaltgabel (4) nach Anspruch 11, **dadurch gekennzeichnet, dass** das Führungsteil (8) als ein gebogener Deckel (16) mit zwei offenen Enden ausgeführt ist, wobei an den offenen Enden wenigstens ein Nietzapfen (20) der Nietverbindung (19) ausgeformt ist.

15. Schaltgabel (4) nach Anspruch 14, **dadurch gekennzeichnet, dass** die offenen Enden des Führungsteils (8) am Grundkörper (6) derart anliegen, dass das Führungsteil (8) und der Grundkörper (6) als Baueinheit ein Führungsauge umgreifen.

16. Schaltgabel (4) nach Anspruch 1, **dadurch gekennzeichnet, dass**, an der Schaltgabel ein Schaltarm (13) angebracht ist, wobei der Schaltarm (13) mit der Schaltgabel (4) durch wenigstens eine Nietverbindung (19) verbunden ist.

17. Schaltgabel (4) nach Anspruch 1, **dadurch gekennzeichnet, dass** der Schaltarm (13) mit dem Führungsteil (8) durch wenigstens eine Nietverbindung (19) verbunden ist.

18. Schaltgabel (4) nach einem der Ansprüche 16 oder 17, **dadurch gekennzeichnet, dass** wenigstens ein Nietzapfen (20) der wenigstens einen Nietverbindung (19) einteilig mit dem Schaltarm (13) ausgeführt ist.

19. Schaltgabel (4) nach einem der Ansprüche 16 oder 17, **dadurch gekennzeichnet, dass** der Schaltarm (13) als ein spanlos umgeformtes Blechteil ausgeführt ist.

20. Schaltgabel (4) nach einem der Ansprüche 1 bis 19, **dadurch gekennzeichnet, dass** der Grundkörper (6) ein Profilkörper ist.

21. Schaltgabel (4) nach Anspruch 20, **dadurch gekennzeichnet, dass** der Profilkörper im Schnitt, senkrecht zur Fläche, die durch den gabelförmigen Grundkörper (6) definiert ist, ein im Wesentlichen U-förmiges Profil aufweist.

## Claims

1. Gearshift fork (4) for a manual transmission, comprising
- a base body (6) that has a substantially fork-shaped configuration and
- surrounds a sliding sleeve (1) at least partially in the peripheral direction thereof,
- a guide element (8) that is fixed on the base body (6), and
- the guide element (8) is connected through at least one riveted joint (19) to the base body (6), **characterised in that**
- at least one rivet peg (20) of the riveted joint (19) is configured in one piece with the base body (6) and
- that the guide element (8) is made up of one connecting piece (7) and one bent cover (16) with two open ends, the cover (16) being fixed at its open ends to the connecting piece (7) in such a way that a guide eye is surrounded by the assembled unit made up of the cover (16) and the connecting piece (7), and the connecting piece (7) bears against at least one region of the base body (6) and is connected to the base body (6) in this region by means of the riveted joint (19).

2. Gearshift fork (4) according to claim 1, **characterised in that** the base body (6) with the at least one rivet peg (20) is a one-piece sheet metal part shaped without chip removal.

3. Gearshift fork (4) according to claim 1, **characterised in that** the guide element (8) is configured as a gearshift rail.

4. Gearshift fork (4) according to claim 1, **characterised in that** the guide element (8) surrounds a guide eye and, starting from there, merges into at least one leg that bears against the base body (6), the leg and the base body (6) being connected by means of at least one riveted joint (19).

5. Gearshift fork (4) according to claim 4, **characterised in that** the guide element (8) is a one-piece sheet metal part shaped without chip removal.

6. Gearshift fork (4) according to claim 1, **characterised in that** the connecting part (7) is connected to the bent cover (16) by means of at least one riveted joint (19).

7. Gearshift fork (4) according to claim 1, **characterised in that** the cover (16) is a sheet metal part shaped without chip removal.

8. Gearshift fork (4) according to claim 1, **characterised in that** the connecting piece (7) is a sheet metal part shaped without chip removal.

9. Gearshift fork (4) according to claim 6, **characterised in that** the at least one rivet peg (20) of the riveted joint (19) is configured in one piece with the cover (16).

10. Gearshift fork (4) according to claim 6, **characterised in that** the connecting piece (7) is provided with at least one aperture (21) corresponding to the at least one rivet peg (20), into which aperture (21) the at least one rivet peg (20) is at least inserted and inseparably deformed.

11. Gearshift fork (4) according to claim 1, **characterised in that** the at least one rivet peg (20) of the at least one riveted joint (19) is configured in one piece with the guide element (8).

12. Gearshift fork (4) according to claim 11, **characterised in that** the guide element (8) is a sheet metal part shaped without chip removal.

13. Gearshift fork (4) according to claim 1, **characterised in that** the base body is a sheet metal part shaped without chip removal.

14. Gearshift fork (4) according to claim 11, **characterised in that** the guide element (8) is configured as a bent cover (16) with two open ends, and at least one rivet peg (20) of the riveted joint (19) is formed on the open ends.

15. Gearshift fork (4) according to claim 14, **characterised in that** the open ends of the guide element (8) bear in such a way against the base body (6) that the guide element (8) and the base body (6) forming an assembled unit surround a guide eye.

16. Gearshift fork (4) according to claim 1, **characterised in that** a gearshift arm (13) is attached to the gearshift fork, and the gearshift arm (13) is connected to the gearshift fork (4) by at least one riveted joint (19).

17. Gearshift fork (4) according to claim 1, **characterised in that** the gearshift arm (13) is connected to the guide element (8) by at least one riveted joint (19).

18. Gearshift fork (4) according to one of claims 16 or 17, **characterised in that** at least one rivet peg (20) of the at least one riveted joint (19) is configured in one piece with the gearshift arm (13).

19. Gearshift fork (4) according to one of claims 16 or 17, **characterised in that** the gearshift arm (13) is made without chip removal as a shaped sheet metal part.

20. Gearshift fork (4) according to one of claims 1 to 19, **characterised in that** the base body (6) is a profiled body.

21. Gearshift fork (4) according to claim 20, **characterised in that**, in a section perpendicular to the surface that is defined by the fork-shaped base body (6), the profiled body has a substantially U-shaped profile.

## Revendications

1. Fourchette (4) de changement de vitesse pour une boîte de vitesses, ladite fourchette comprenant
- un corps de base (6) qui a une configuration globalement bifurquée et
- qui entoure un manchon coulissant (1) au moins partiellement en direction périphérique, et
- un élément de guidage (8) fixé au corps de base (6) et
- relié au corps de base (6) par au moins une rivure (19), **caractérisée en ce que**
- au moins un tenon de rivet (20) de la rivure (19) est configuré en une seule pièce avec le corps de base (6), et
- l'élément de guidage (8) est composé d'une pièce de raccordement (7) et d'un couvercle (16) cintré ayant deux extrémités ouvertes, ledit couvercle (16) étant fixé à ses extrémités ouvertes à la pièce de raccordement (7) de telle façon que, un oeillet de guidage est entouré par l'ensemble unitaire formé par le couvercle (16) et la pièce de raccordement (7), et cette pièce de raccordement (7) s'appuie au moins contre une région du corps de base (6) et est reliée au corps de base (6) dans cette région par une rivure (19).

2. Fourchette (4) de changement de vitesse selon la revendication 1, **caractérisée en ce que** le corps de base (6) comprenant l'au moins un tenon de rivet (20) est une pièce en tôle formée d'un seul tenant sans enlèvement de copeaux.

3. Fourchette (4) de changement de vitesse selon la revendication 1, **caractérisée en ce que** l'élément de guidage (8) est configuré sous la forme d'une réglette de changement de vitesse.

4. Fourchette (4) de changement de vitesse selon la revendication 1, **caractérisée en ce que** l'élément de guidage (8) entoure un oeillet de guidage et, à partir de celui-ci, se raccorde à au moins un bras qui s'appuie contre le corps de base (6), le bras et le corps de base (6) étant reliés, l'un à l'autre, par au moins une rivure (19).

5. Fourchette (4) de changement de vitesse selon la revendication 4, **caractérisée en ce que** l'élément de guidage (8) est une pièce en tôle formée d'un seul tenant sans enlèvement de copeaux.

6. Fourchette (4) de changement de vitesse selon la revendication 1, **caractérisée en ce que** la pièce de raccordement (7) est reliée au couvercle (16) cintré par au moins une rivure (19).

7. Fourchette (4) de changement de vitesse selon la revendication 1, **caractérisée en ce que** le couvercle (16) est une pièce en tôle formée sans enlèvement de copeaux.

8. Fourchette (4) de changement de vitesse selon la revendication 1, **caractérisée en ce que** la pièce de raccordement (7) est une pièce en tôle formée sans enlèvement de copeaux.

9. Fourchette (4) de changement de vitesse selon la revendication 6, **caractérisée en ce que** l'au moins un tenon de rivet (20) de la rivure (19) est configuré en une seule pièce avec le couvercle (16).

10. Fourchette (4) de changement de vitesse selon la revendication 6, **caractérisée en ce que** la pièce de raccordement (7) est munie d'au moins une ouverture (21) qui correspond à l'au moins un tenon de rivet (20), dans laquelle ouverture (21) est au moins inséré et déformé de manière non détachable l'au moins un tenon de rivet (20).

11. Fourchette (4) de changement de vitesse selon la revendication 1, **caractérisée en ce que** l'au moins un tenon de rivet (20) de l'au moins une rivure (19) est configuré en une seule pièce avec l'élément de guidage (8).

12. Fourchette (4) de changement de vitesse selon la revendication 11, **caractérisée en ce que** l'élément de guidage (8) est une pièce en tôle formée sans enlèvement de copeaux.

13. Fourchette (4) de changement de vitesse selon la revendication 11, **caractérisée en ce que** le corps de base (6) est une pièce en tôle formée sans enlèvement de copeaux.

14. Fourchette (4) de changement de vitesse selon la revendication 11, **caractérisée en ce que** l'élément de guidage (8) est configuré sous la forme d'un couvercle (16) cintré ayant deux extrémités ouvertes, et **en ce que**, au moins un tenon de rivet (20) de la rivure (19) est formé sur ces extrémités ouvertes.

15. Fourchette (4) de changement de vitesse selon la revendication 14, **caractérisée en ce que** les extrémités ouvertes de l'élément de guidage (8) s'appuient de telle façon contre le corps de base (6) que l'élément de guidage (8) et le corps de base (6), en formant un ensemble unitaire, entoure un oeillet de guidage.

16. Fourchette (4) de changement de vitesse selon la revendication 1, **caractérisée en ce que**, un bras (13) de changement de vitesse est attaché à la fourchette de changement de vitesse, le bras (13) de changement de vitesse étant relié à la fourchette (4) de changement de vitesse par au moins une rivure (19).

17. Fourchette (4) de changement de vitesse selon la revendication 1, **caractérisée en ce que** le bras (13) de changement de vitesse est relié à l'élément de guidage (8) par au moins une rivure (19).

18. Fourchette (4) de changement de vitesse selon l'une des revendications 16 ou 17, **caractérisée en ce que**, au moins un tenon de rivet (20) de l'au moins une rivure (19) est configuré d'un seul tenant avec le bras (13) de changement de vitesse.

19. Fourchette (4) de changement de vitesse selon l'une des revendications 16 ou 17, **caractérisée en ce que** le bras (13) de changement de vitesse est configuré sous la forme d'une pièce en tôle formée sans enlèvement de copeaux.

20. Fourchette (4) de changement de vitesse selon l'une des revendications 1 à 19, **caractérisée en ce que** le corps de base (6) est un corps profilé.

21. Fourchette (4) de changement de vitesse selon la revendication 20, **caractérisée en ce que**, dans une coupe perpendiculaire à la surface qui est définie par le corps de base (6) bifurqué, le corps profilé possède un profil sensiblement en forme de U.
